# EUROPÄISCHE PATENTSCHRIFT

(11) **EP 2 834 143 B1**
(45) Veröffentlichungstag und Bekanntmachung des Hinweises auf die Patenterteilung: **22.04.2020**
(21) Anmeldenummer: 13715132.0
(22) Anmeldetag: 25.03.2013
(51) Int. Cl.: B62M 6/75

(54) **ELEKTROANTRIEB FÜR EIN FAHRRAD**
ELECTRIC DRIVE FOR A BICYCLE
ENTRAÎNEMENT ÉLECTRIQUE POUR UNE BICYCLETTE

(30) Priorität: 03.04.2012 DE 102012006830
(43) Veröffentlichungstag der Anmeldung: 11.02.2015
(73) Patentinhaber: Velogical Engineering GmbH, 51065 Koln (DE)
(72) Erfinder: FRIEDEN, Peter, 51065 Köln (DE)
(74) Vertreter: Lippert Stachow Patentanwälte Rechtsanwälte
(86) Internationale Anmeldenummer: PCT/EP2013/000889
(87) Internationale Veröffentlichungsnummer: WO 2013/149708

(56) Entgegenhaltungen:
- DE-A1- 3 532 993
- DE-A1-102009 053 973
- DE-U1- 29 922 683
- FR-A1- 2 802 890
- JP-A- 2002 029 485
- US-A- 5 078 227
- US-A- 5 735 363
- US-A1- 2009 230 791

## Beschreibung

Die Erfindung betrifft einen Elektroantrieb für ein Fahrrad mit einem oder zwei Motoren und mit einem Reibring zur Übertragung einer Antriebsleistung durch Reibschluss auf ein Laufrad, wobei der Motor pendelnd um eine Pendelachse gelagert ist, und wobei die Pendelachse gegenüber der Motorachse seitlich versetzt ist, und wobei die Pendelachse parallel insbesondere im Wesentlichen parallel zur Motorachse liegt.

Ein Elektroantrieb ist aus der FR 2 802 890 A1 bekannt. Die bekannte Konstruktion schlägt zwei Motoren vor, die symmetrisch zum Laufrad angeordnet sind. Sie sind jeweils mit einem außenliegenden Gehäuse und einer zentralen Motorwelle versehen, welche konische Antriebsköpfe trägt, die mit dem Laufrad in Reibkontakt sind. Für eine effektive Erzeugung eines Anpressdrucks der Antriebsköpfe auf das Laufrad erscheint die bekannte Konstruktion unzweckmäßig.

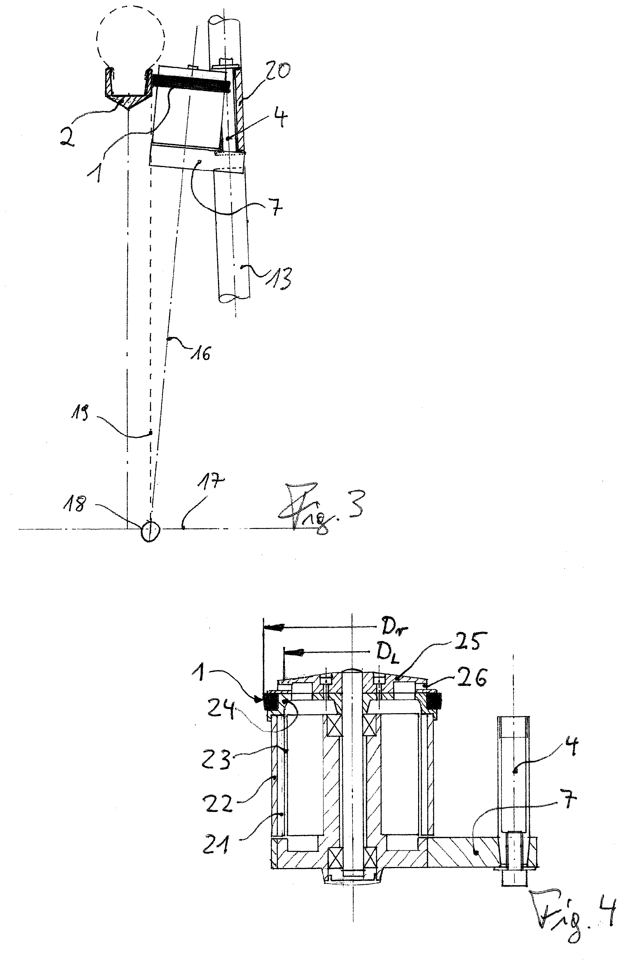

Ein gattungsgemäßer Elektroantrieb ist aus dem Patent US 5,735,363 bekannt, welches mehrere Ausführungsbeispiele eines Elektroantriebs für ein Fahrrad oder für einen Rollstuhl vorschlägt. Gattungsgemäß ist das Ausführungsbeispiel der Figuren 4 bis 5B weil es sich dabei um ein Ausführungsbeispiel handelt, das nur einseitig des Laufrades einen Motor mit einem Reibring (Reibrolle) vorsieht. Auf der gegenüberliegenden Seite des Laufrades ist bei diesem Stand der Technik eine sogenannte Dummy-Rolle vorgesehen, die über keinen Motorantrieb verfügt. Sowohl die Reibrolle als auch die Dummy-Rolle sind über einen gemeinsamen Träger gehalten und beide wirken mit dem Reifen des Laufrades zusammen. Der Träger ist relativ zum Fahrradrahmen um einen Drehpunkt schwenkbar angeordnet. Diese Konstruktion ist mechanisch kompliziert und mit einem hohen technischen Aufwand verbunden. Sie ist dennoch uneffektiv, ihr Wirkungsgrad unbefriedigend.

Darüber hinaus sind andere Konzepte von Elektroantrieben für ein Fahrrad bekannt. Die derzeit überwiegend eingesetzten Nabenmotoren drehen nur mit der Laufraddrehzahl, ca. 200Upm bei 25km/h, und müssen extrem hohe Drehmomente erzeugen, um am äußeren Radumfang eine ausreichende Vortriebskraft zu erzeugen. Entsprechend groß sind der Materialeinsatz, das Gewicht und die Kosten dieser Bauart. Nachteilig ist weiterhin, dass das erhebliche Motorgewicht von ca. 3kg zu 100% in die ungefederte Masse eingeht und die Fahreigenschaften von gefederten Rädern negativ beeinflusst. Vorderradmotoren können auf schlüpfriger Fahrbahn leicht durchdrehen, Sturzgefahr. Hinterradmotoren behindern den Einbau von Scheibenbremsen, Ketten- und Nabenschaltungen.

Mittelmotoren vermeiden diese Nachteile, denn sie werden üblicherweise unmittelbar hinter dem Tretlager im Rahmen eingebaut, haben ein hoch untersetztes Getriebe und übertragen ihre Kraft durch ein Ritzel auf die Kette. Die Wartungsintervalle dieser hoch beanspruchten Verschleißteile werden durch den Motor allerdings zusätzlich verkürzt. Der Kraftfluss ist kompliziert und verlustbehaftet, denn die Leistung des hochtourig laufenden Motors muss zunächst auf die sehr niedrige Kettengeschwindigkeit übertragen, und von da wieder auf die hohe Umfangs-geschwindigkeit des Laufrades rückverwandelt werden. Einbauraum und Befestigung des Motors müssen bereits in der Rahmenkonstruktion berücksichtigt sein, womit nachträglicher Einbau ausscheidet.

Eine besondere Variante des Mittelmotors umgeht diese Beschränkung, denn hier sitzt der Motor konzentrisch auf der Tretlagerachse, besetzt den Einbauraum des Kettenblatts und benötigt nur eine Drehmomentstütze am Rahmen. Folglich lässt er sich bei vielen Rädern problemlos nachrüsten. Gegenüber dem Nabenmotor hat er aber ein nochmals verschärftes Gewichtsproblem. Da er nur mit Trittfrequenz laufen kann muss er bei 60 bis 80Upm fast dreimal so viel Drehmoment erzeugen.

Neben der legendären VeloSolex mit Benzinmotor, die mit hohen Stückzahlen am Markt sehr erfolgreich war, sind aus der Patentliteratur vier weitere Anmeldungen bekannt, die der hier beschriebenen Erfindung nahe stehen, weil sie ebenfalls das Ziel verfolgen, mit leichten und hochtourig laufenden Motoren auf direktem Weg das Laufrad am äußeren Umfang über Reibschluss anzutreiben. Physikalisch ist dieser Weg durchaus sinnvoll, denn das Leistungsvermögen von Elektromotoren steigt proportional mit der Drehzahl an und wegen der hohen Umfangsgeschwindigkeit kann eine gegebene Leistung mit entsprechend kleineren Kräften übertragen werden.

US 2011/0232985A1 kommt der Solex am nächsten, denn der achsparallele Motor überträgt seine Umfangskraft direkt auf die Lauffläche des Hinterreifens.

DE 42 19 763 A1 und DE 196 33 345 A1 haben einen einzigen Motor, der außerhalb bzw. oberhalb des Reifens angeordnet ist und der über ein Getriebe, das auch gleichzeitig die Leistungsverzweigung auf zwei Reibrollen übernimmt, die Reifenflanken beidseitig antreibt.

DE 690 31 993 T2 benötigt kein Getriebe, denn hier liegen zwei gegenläufig rotierende Motoren ebenfalls außerhalb/oberhalb des Vorderreifens und die Reibrollen befinden sich auf den nach unten verlängerten Motorachsen. Verschiedene Anordnungen von Motoraufhängung und Hebeln ermöglichen es, die Reibrollen aktiv in Arbeitsposition mit hohem Anpressdruck an den Reifen, oder in berührungslose Freilaufstellung zu bewegen.

Weiterer Stand der Technik ist aus der US 5,078,227 bekannt, welche mehrere Ausführungsbeispiele eines Elektroantriebs vorschlägt, ebenfalls für ein Fahrrad oder für einen Rollstuhl vorgesehen.

Die DE 10 2009 053 973 A1 schlägt einen Elektroantrieb für ein Fahrrad vor, welcher wenigstens einen Reibring hat, der von einem Elektromotor über ein flexibles oder gelenkartiges Wellenelement angetrieben ist. Der Reibring kann mittels einer Verstelleinrichtung in Eingriff mit der Radflanke gestellt werden und lässt sich ebenso außer Eingriff stellen.

Aus der US 2009/0230791 A1 ist eine Elektroantriebseinheit bekannt, die über eine Kühlung verfügt.

Ziel dieser Erfindung ist ein extrem leichter und preiswerter Elektroantrieb für Fahrräder, der mit nur wenig bewegten Teilen und kurzer Funktionskette besonders robust und wartungsarm ist. Durch hohe Motor- und Übertragungswirkungsgrade sowie minimale Schleppverluste soll trotz geringem Akkugewicht eine hohe Reichweite erzielt werden. Es sollen Vorder-, Hintersowie Allradantrieb möglich sein und bezüglich Ketten-, Nabenschaltung und Bremsen keine Einschränkungen bestehen. Neben der Nachrüstbarkeit an möglichst viele Fahrradtypen besteht ein besonderes Anliegen darin, trotz E-Antrieb den ursprünglichen Fahrradcharakter weitgehend zu erhalten, wozu neben optischer Unauffälligkeit auch problemloser Transport in Auto und Bahn sowie müheloses Tragen über Stufen und Treppen gehört.

Der Erfindung liegt daher die Aufgabe zugrunde, einen konstruktiv einfachen Elektroantrieb für ein Fahrrad vorzuschlagen der gegenüber dem gattungsgemäßen Stand der Technik die Effektivität verbessert.

Diese Aufgabe wird durch einen Elektroantrieb gemäß dem Anspruch 1 gelöst.

Der erfindungsgemäße Fahrradantrieb unterscheidet sich von den bekannten Ausführungen dadurch, dass der oder die Motoren innerhalb/unterhalb des Reifenumfangs angeordnet sind und dass die Kraftübertragung nicht auf den Reifen, sondern auf die Felgenflanke erfolgt.

Im Gegensatz zum Reifen, der wegen Fertigungs- und Montageungenauigkeiten gleich mehrere grobe Formabweichungen innerhalb einer Radumdrehung aufweisen kann, hat die Felge eine ideal bearbeitete Oberfläche, die allenfalls durch Seitenschlag kleine Querbewegungen pro Radumdrehung ausführt. Folglich kann der Reibring auf der Felgenflanke viel gleichmäßiger und ruhiger abrollen als auf der Reifenoberfläche.

Solange das Rad in Bewegung bleibt wirkt der Reifenwulst wie ein Schmutzabweiser und hält die Felge nahezu perfekt sauber, was definierte Reibungsverhältnisse begünstigt. Der Reifen hingegen hat durch den direkten Fahrbahnkontakt fast immer einen mehr oder weniger ausgeprägten Schmutz- oder Schmierfilm, was nur durch stark überhöhten Anpressdruck ausgeglichen werden kann, auf Kosten erhöhter Walkarbeit und kleinerem Wirkungsgrad.

Die Motoranordnung innerhalb des Reifendurchmessers hat neben der optischen Unauffälligkeit den Vorteil, dass kein Konflikt mit Schutzblechen oder Gepäckträgern besteht. Da die radialen Übertragungskräfte des Reibringes auf kürzestem Weg in das obere Motorlager eingeleitet werden, gibt es keine umlaufenden Wellenbiegemomente wie in den obigen Entgegenhaltungen, was eine besonders material- und gewichtsparende Konstruktion ermöglicht.

Die Erfindung betrifft einen Elektroantrieb für Fahrräder, bei dem zwei gegenüber liegende Außenläufermotoren ihre Umfangskraft durch einen elastischen Ring auf die Fahrradfelge übertragen. Der dazu notwendige Anpressdruck wird durch die Motoren selbst erzeugt, denn die bewegliche Aufhängung der Motoren ist so gewählt, dass Umfangskraft und Anpressdruck stets in einem geometrisch vorgegebenen, festen Verhältnis stehen.

Weitere vorteilhafte Ausgestaltungen der Erfindung sind in den Unteransprüchen aufgeführt.

Ausführungsbeispiele der Erfindung sind in den Zeichnungen dargestellt und werden im Folgenden näher beschrieben. Es zeigen
- Fig. 1: eine Ansicht von oben auf den Antrieb am Vorderrad,
- Fig. 2: eine Seitenansicht eines Fahrrades mit Antrieben am Vorder- und Hinterrad,
- Fig. 3: eine Teilansicht eines Antriebs am Hinterrad,
- Fig. 4: einen Schnitt durch den Antrieb,
- Fig. 5: die Einbausituation bei nachträglichem Anbau des Antriebs,
- Fig. 6: eine Teilansicht beim Hinterradantrieb,
- Fig. 7: eine Teilansicht nach Fig. 6 mit zusätzlichem Hubmagnet.

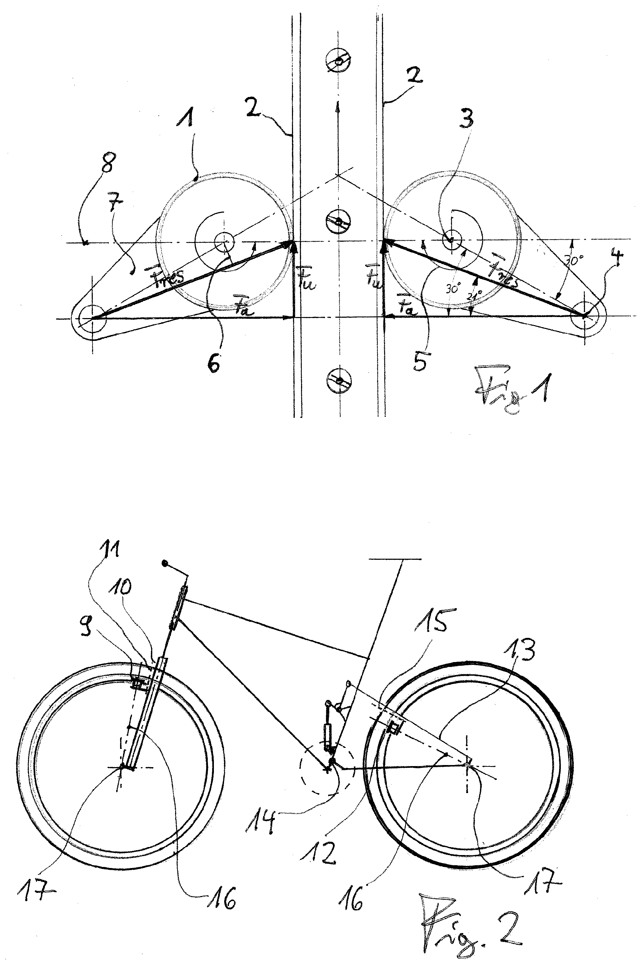

Fig. 1 zeigt den Antrieb am Vorderrad von oben gesehen und ohne Reifen, wobei die prinzipielle Wirkungsweise deutlich wird: Der elastische Reibring 1 rollt auf der Felgenflanke 2 ab und übt auf sie eine resultierenden Kraft Fᵣₑₛ aus. Diese lässt sich zerlegen in eine Anpresskraft Fₐ und eine Umfangskraft Fᵤ, die den gewünschten Vortrieb erzeugt. Dank symmetrischer Anordnung und gegenläufiger Drehrichtungen 5 heben sich die Anpresskräfte auf und die Vortriebskräfte addieren sich. Gegenüber dem obengenannten Stand der Technik hat dieser Antrieb die zusätzliche Besonderheit, dass jeder Motor selbst den Anpressdruck durch sein Drehmoment erzeugt, da die Reaktionskraft von Fᵣₑₛ mit ihrem seitlichen Abstand (Hebelarm 6) zur Motorachse 3 stets ein dem Motormoment gleich großes Gegenmoment bildet. Durch den Berührungspunkt auf der Felge und durch die Pendelachse 4, in der der Motorträger 7 reibungsarm gelagert ist, steht die Lage des Kraftvektors ein für alle Mal fest, so dass Umfangs- und Anpresskraft abhängig von der Motorleistung zwar variieren können, untereinander aber stets in einem festen Verhältnis stehen.

Da die Rollreibung und somit auch die Übertragungsverluste mit steigendem Anpressdruck zunehmen, sollte dieser nur so groß wie nötig und so klein wie möglich sein. Eine schlupf- und verschleißfreie Übertragung mit dem höchstmöglichen Wirkungsgrad ist dann gewährleistet, wenn der Quotient Fᵤ / Fₐ etwas kleiner als der kleinste zu erwartende Reibungskoeffizient ist.

Im gewählten Beispiel hat der Anstellwinkel a zwischen der Radachse 8 und der Verbindungslinie von Motor- und Pendelachse einen Wert von 30°, woraus sich ein Keilwinkel β von 21° ergibt mit einem Kräfteverhältnis Fᵤ / Fₐ = tan21°= 0,38.

Es wird also eine Reibpaarung oder eine Oberflächenbehandlung der Felgenflanke so gewählt, dass der Haftreibungskoeffizient niemals unter 0,4 abfällt. Alternativ kann der Anstellwinkel a etwas verkleinert werden. Aus Fig.1 wird deutlich, dass allzu große Abweichungen von 30° nicht sinnvoll sind, denn wird der Winkel α stark vergrößert gerät man schnell an die Haftgrenze. Wird er zu stark verkleinert, verkürzt sich der Hebelarm 6 und der Motor kann unkontrollierbar hohe Kräfte aufbauen,

Neben der automatischen Wirkungsgradoptimierung besteht ein weiterer Vorteil dieses Antriebs darin, dass bei abgeschaltetem Motor keine Rollreibung erzeugt wird und sogar die Leerlaufreibung eines drehenden Motors vermieden wird, da der stehende Motor erfindungsgemäß von der drehenden Felge abgestoßen wird. Somit hat diese Aufhängung eine zwangsläufige Freilauffunktion.

Das Wiederanfahren funktioniert ebenfalls automatisch, da die Massenträgheit des lastfrei beschleunigenden Rotors eine Verdrehung der Motoraufhängung in Richtung Felge bewirkt. Sobald dort ein Kontakt besteht keilt sich der Motor durch die höhere Leerlauf-Umfangsgeschwindigkeit an der Felge fest. Da sich die Drehzahlsteller auf die Motoren aufsynchronisieren, benötigt jeder Motor seinen eigenen Steller.

Ein Anschlag (nicht dargestellt) sorgt dafür, dass der Motor maximal nur 2mm von der Felge abheben kann. Ähnlich wie bei Felgenbremsen reicht dieser Luftspalt für berührungslosen Freilauf aus und die Wegbegrenzung verhindert, dass der Motor herumschlackert und beim Anfahren durch zu viel Schwung wieder abprallt.

Fig. 2 zeigt die Einbausituationen am voll gefederten Vorderrad und Hinterrad. Bei Vorderradantrieb sitzen die Motoren 9 vorder Gabel bzw. vor dem Tauchrohr 10 der Federgabel. Hierzu wird eine Scheibenbremse vorgeschlagen, da der übliche Einbauraum einer Felgenbremse durch die Motoren beansprucht wird. Die ungefederte Masse erhöht sich um das Motorengewicht von ca. 500g, was sich in der Praxis aber kaum auswirkt.

Da die Pendelachse 11 nahezu senkrecht steht, wirken fast keine Gewichtsmomente auf die Motoraufhängung, so dass das An- und Abklappen der Motoren ohne weitere Maßnahmen besonders einfach und zuverlässig funktioniert.

Von Vorteil ist diese Variante auch dadurch, dass komplette Einbausätze hergestellt werden können, bei denen der Motor 9, seine Aufhängung, der elastische Reibring und die Felgenoberfläche in Geometrie und Materialauswahl perfekt aufeinander abgestimmt sind.

Bei Hinterradantrieb sitzen die Motoren 12 unterhalb der schräg ansteigenden Sattelstrebe bzw. Hinterbaustrebe 13. Da Felgenbremsen üblicherweise über dieser Strebe angebracht werden, bestehen hier keine Einschränkungen gegenüber anderen Komponenten und eine Nachrüstung ist bei vielen Radtypen möglich.

Vorteilhaft ist auch, dass der Abstand der Motoren 12 vom Drehpunkt 14 der Hinterradschwinge nur etwa halb so groß wie der Nabenabstand ist, so dass sich die ungefederte Masse nur um die Hälfte des Motorgewichts, also um ca.250g erhöht.

Da die Pendelachsen 15 hier sehr stark geneigt sind muss das Motorgewicht durch eine Feder neutralisiert werden, damit die Motoren beim Beschleunigen zuverlässig anklappen bzw. die Reibringe an der Felge anliegen.

Selbstverständlich müssen die Motorachsen 16 die Radachsen 17 schneiden da anderenfalls eine reibungs- und verschleißerhöhende Relativbewegung in der Kontaktzone entsteht.

Fig. 3 zeigt den Hinterradantrieb von schräg unten in Längsrichtung. Da die Felge 2 an der Oberkante des Reibrings 1 eine geringfügig höhere Umfangsgeschwindigkeit hat als an der Unterkante ist eine optimale Übertragung ohne jegliche Relativbewegung in der Kontaktzone nur dann gegeben, wenn die Motorachse 16 die Radachse 17 in der Ebene 19 der Felgenflanke schneidet. Der Ring schleift sich auf Dauer auf der Felgenbahn ein und nimmt dadurch eine leicht konische Außenkontur an. Wie unschwer zu erkennen, müssen die entgegengesetzten Neigungen von Motorachse 16 und Hinterbaustrebe 13 konstruktiv angepasst werden, was hier innerhalb des Motorträgers 7 geschehen ist. Möglich ist der Ausgleich auch innerhalb des Lagerklotzes 20, dessen Lagerbohrung dann gegenüber der Strebenachse geneigt sein muss.

Der Lagerklotz 20 kann an den Rahmen geklebt, gelötet oder geschweißt, bei nachträglichem Einbau mit Schrauben, Schellen oder Gewindebügeln befestigt werden. An den Tauchrohren von Federgabeln kann ein entsprechender Anguss zur Aufnahme der Bohrung vorgesehen werden.

Fig. 4 zeigt den geschnittenen Motor 12 mit Motorträger 7 und Pendelachse 4. Es handelt sich um einen modernen bürstenlosen Außenläufermotor. Dank der flachen Hochleistungsmagnete 21 , die sich innen am Magnetrückschlussring 22 befinden liegt der Luftspalt 23 weit außen, so dass diese Bauart extrem hohe Drehmomente erzeugen kann. Damit das Drehmoment als möglichst große Tangentialkraft auf die Felge übertragen wird sollte der Abrolldurchmesser Dᵣ des elastischen Reibrings 1 den Durchmesser D_{L} des Luftspalts 23 möglichst wenig übertreffen. Konstruktiv ist das durch die Lage des Rings 1 oberhalb der Magnete 21 verwirklicht. Der Ring 1 hat einen kleineren Durchmesser als sein Sitz auf dem Ringträger 24, so dass er beim Einbau radial vorgespannt wird. Zusätzlich kann er durch die Verschraubung des Motordeckels 25 axial eingespannt werden. Der Deckel sollte radiale Lüftungsbohrungen 26 enthalten, wodurch ein Kühlluftstrom durch den Motor erzwungen wird.

Der Antrieb sollte Regenfahrten und Duschen mit dem Hochdruckreiniger schadlos überstehen, weshalb die elektrischen Komponenten wasserdicht gekapselt sind. Beim Motor 9, 12 ist eine vollständige Kapselung wegen der Kühlung weder sinnvoll noch nötig, denn das einzig wirklich wasserempfindliche Bauteil sind die Kugellager, für die ein besonderer Schutz gegen Spritzwasser und Feuchtigkeit z. B. durch Dichtlippen vorzusehen ist. Blechpaket und Wicklung sollten mit einem temperaturfesten Lack versiegelt/getränkt werden, die übrigen Motorteile sind ohnehin korrosionsgeschützt.

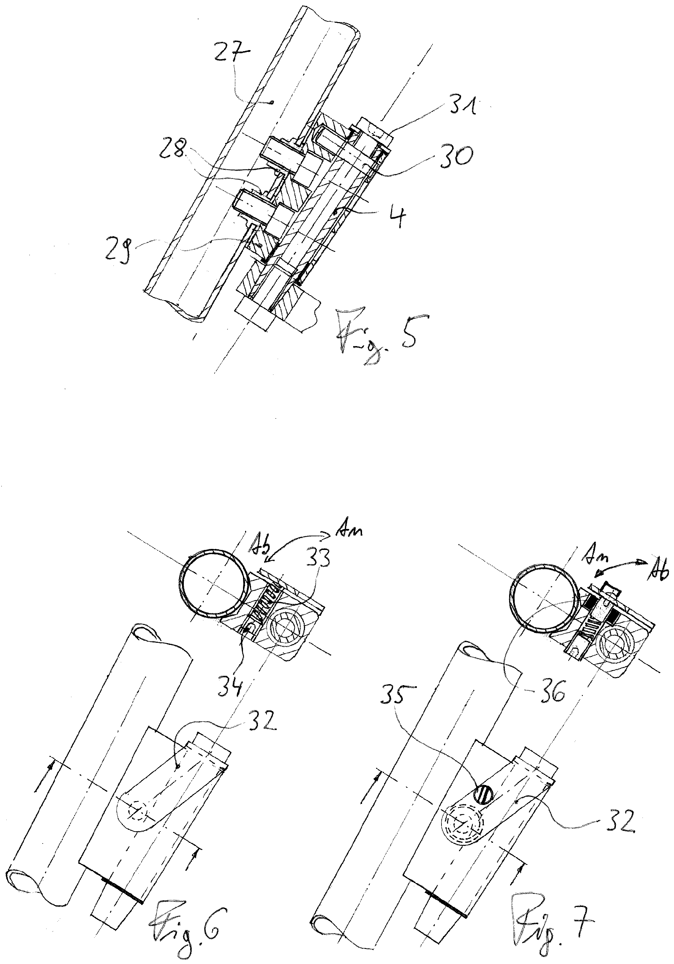

Fig.5 zeigt eine Möglichkeit, wie die Lagerung der Pendelachse 4 an einem Rahmenrohr 27 nachträglich angebaut wird: Mit zwei Nietmuttern 28 ist der Lagerklotz 29 auf das Rohr geschraubt. Bemerkenswert ist der Drehanschlag innerhalb des Lagerklotzes, der verhindert, dass sich der Motor mehr als ca. 2mm von der Felge entfernt. Er wird durch einen Stift 30 gebildet, der durch eine Querbohrung in der Pendelachse 4 gehalten und mit einer Schraube 31 gesichert ist. Das Drehspiel von nur wenigen Grad ergibt sich aus der Differenz von Bohrungs- und Stiftdurchmesser.

Fig. 6 zeigt einen außen liegenden Anschlag 32, der durch ein verlängertes und um 90° schräg abgewinkeltes Unterlegblech gebildet wird. Diese Variante beinhaltet eine Gewichtskompensation für schräg hängende Motoren bei Hinterradantrieb. Die Schraubendruckfeder 33 wird durch die Madenschraube 34 justiert und wirkt in Anlagerichtung; wird aber nur soweit vorgespannt bis das Gewicht neutralisiert ist.

Fig. 7: In diesem Lagerklotz ist neben einem geänderten Anschlag (Anschlagschraube 35) noch ein Hubmagnet 36 eingebaut, der den eingangs beschriebenen Anklappeffekt beim Starten der Motoren aktiv unterstützen soll. Hier sind die Drehrichtungen vertauscht, denn bei Stromfluss soll der Motor in Anlage/Arbeitsstellung gezogen werden, bei abgeschaltetem Motor soll auch der Hubmagnet 36 abfallen, wobei das Unterlegblech 32 gegen die Anschlagschraube 35 gedrückt wird. Je nach Einbaulage (senkrecht oder hängend) kann die Feder als Zug- oder Druckfeder ausgeführt sein. Diese Variante kann bei langsamen Fahrzeugen, bei denen die Dynamik der Motorbeschleunigung nicht ausreicht oder bei Einsatz unter Extrembedingungen, (z.B. Offroad mit erhöhtem Schmutzanfall) notwendig sein.

Bei sehr kleinen und besonders steifen Laufrädern, wie sie bei Klapp- oder Kinderrädern verwendet werden, ist es denkbar, den Antrieb in sinngemäßer Weise mit nur einem Motor einzusetzen, wobei die Anpresskraft Fₐ dann voll auf die Laufradstruktur einwirkt.

Bei 26 bis 28 Zoll Rädern ist auf jeden Fall die Lösung mit Doppelmotoren vorzuziehen mit einer Besonderheit: Im Dynamobetrieb reicht nur ein Motor, der mit mäßigem Federdruck dauerhaft an die Felge gedrückt wird, vollkommen aus. Der mitgeschleppte Motor funktioniert dann als Synchrongenerator und es wird an zweien der drei Motoranschlüsse eine Wechselspannung abgegriffen. Es ist möglich auch in dieser Betriebsart die Motorfunktion zu aktivieren, denn ob die Spannung aus dem Motor oder dem Motorregler kommt ist zweitrangig. Nur muss durch eine elektronische Schaltung sichergestellt sein, dass keine unzulässigen Spannungsspitzen den Scheinwerfer zerstören. Der Vorteil liegt darin, dass eine solche Lichtanlage mit und ohne Akku funktioniert und wenn man bedenkt, dass durch diese Maßnahme ein Nabendynamo (der ja üblicherweise auch um die 400g wiegt) ersatzlos wegfallen kann, ist dieser erfindungsgemäße Antrieb sogar fast gewichtsneutral.

Zwei symmetrisch gegenüberliegende, pendelnd gelagerte Außenläufer-Motoren (Outrunner) übertragen ihre mechanische Leistung über einen elastischen Ring direkt auf die Felge. Der Drehpunkt der Motoraufhängung ist so gewählt, dass die notwendige Anpresskraft in einem festen Verhältnis zu der vom Motor erzeugten Vortriebskraft steht. Aufgrund der gegenüber Nabenmotoren sechzehnmal höheren Drehzahl können die Motoren äußerst leicht und kostengünstig hergestellt werden. Im ausgeschalteten Zustand verursachen sie keine Reibung, da sie dann von der Felgenflanke abheben.

## Patentansprüche

1. Elektroantrieb für ein Fahrrad mit einem oder zwei Motoren und mit einem Reibring (1) zur Übertragung der Antriebsleistung durch Reibschluss auf ein Laufrad, wobei der Motor (9, 12) pendelnd um eine Pendelachse gelagert ist, und wobei die Pendelachse gegenüber der Motorachse (16) seitlich versetzt ist, und wobei die Pendelachse parallel insbesondere im Wesentlichen parallel zur Motorachse (3, 16) liegt, wobei die Verbindungslinie zwischen Pendelachse (4) und Motorachse (3) in Arbeitsposition einen Winkel (α) von unter 45° mit der Radachse (8) bildet, um eine Anpresskraft Fₐ des Reibrings an das Laufrad zu erzeugen, die immer größer als die übertragene Umfangskraft Fᵤ ist, **dadurch gekennzeichnet,**
**dass** der Motor vom Typ Außenläufermotor ist, dass der Reibring (1) mit einer Felge (2) des Laufrades zusammenwirkt, dass der Reibring elastisch ist und sich an oder auf der rotierenden Zylinderfläche des Außenläufermotors (9, 12) eine Ringnut oder Eindrehung zur Aufnahme des Reibrings befindet, wobei dann, wenn zwei Motoren (9, 12) vorgesehen sind, diese symmetrisch angeordnet und gegenläufig rotierend sind, und dass die zwei Motoren über zwei separate Motonsteller/-Regler gespeist werden, die das gleiche Steuersignal zur Leistungsregelung erhalten.

2. Elektroantrieb für ein Fahrrad nach Anspruch 1, **dadurch gekennzeichnet, dass** die zwei Motoren (9, 12) als Antriebseinheit vor der Gabel oder vor der entsprechenden Rahmenstrebe anordbar sind.

3. Elektroantrieb für ein Fahrrad nach Anspruch 1 oder 2, **dadurch gekennzeichnet, dass** eine Freilaufstellung vorgesehen ist und in dieser Freilaufstellung der größtmögliche Abstand zwischen elastischem Reibring (1) und Felge (2) durch einen Anschlag (30, 32, 35) begrenzt ist.

4. Elektroantrieb für ein Fahrrad nach einem der Ansprüche 1 bis 3, **dadurch gekennzeichnet, dass** der Rotor einen Deckel (25) aufweist, und dass der Deckel (25) oder der Rotor mit radialen Luftkanälen (26) versehen ist, die durch Zentrifugalwirkung einen Kühlluftstrom durch den Motor erzeugen.

5. Elektroantrieb für ein Fahrrad nach einem der Ansprüche 1 bis 4, **dadurch gekennzeichnet, dass** der elastische Reibring (1) einen Durchmesser hat, der kleiner ist als der Durchmesser eines Ringträgers (24), auf dem der elastische Reibring sitzt, so dass er beim Einbau radial vorspannbar ist.

6. Elektroantrieb für ein Fahrrad nach Anspruch 4 oder 5, **dadurch gekennzeichnet, dass** eine Verschraubung für den Deckel (25) des Rotors vorgesehen ist, und dass der elastische Reibring (1) mittels des Deckels und der Verschraubung axial einspannbar ist.

7. Elektroantrieb für ein Fahrrad nach einem der Ansprüche 1 bis 6, **dadurch gekennzeichnet, dass** ein flexibles Befestigungssystem vorgesehen ist, welches die nachträgliche Montage an unterschiedliche Fahrradtypen ermöglicht, wobei die exakte tangentiale Ausrichtung der Motoren einstellbar ist.

8. Elektroantrieb für ein Fahrrad nach einem der Ansprüche 1 bis 7, **dadurch gekennzeichnet, dass** eine Lagerung für die Pendelachse (4) in der Formgebung der Gabel bzw. Federgabel bzw. bei Hinterradantrieb in den Sattel- oder Kettenstreben anordbar ist und werksseitig einjustiert werden kann.

9. Elektroantrieb für ein Fahrrad nach einem der Ansprüche 1 bis 8, **dadurch gekennzeichnet, dass** der Motor ein Motorengehäuse aufweist, dass das Motorengehäuse einen steifen, einseitig asymmetrischen Motorträger (7) als Auslager zur Aufnahme der Pendelachse (4) besitzt.

10. Elektroantrieb für ein Fahrrad nach Anspruch 9, **dadurch gekennzeichnet, dass** der Motorträger (7) mit Kühlrippen versehen ist.

11. Elektroantrieb für ein Fahrrad nach einem der Ansprüche 1 bis 10, **dadurch gekennzeichnet, dass** der elastische Reibring (1) auf der Felgenflanke (2) abrollen kann und auf sie eine resultierende Kraft (Fᵣₑₛ) ausübt, die sich in eine Anpresskraft (Fₐ) und eine Umfangskraft (Fu) zerlegen lässt, wobei das Verhältnis von Umfangskraft/Anpresskraft dem tangentialen Wert eines Keilwinkels entspricht, wobei durch eine Oberflächenbehandlung oder eine Oberflächenbeschichtung der Felgenflanke (2) eine Erhöhung des Reibungsbeiwertes erzielbar ist, um eine Verringerung der Anpresskraft und eine Vergrößerung des Anstellwinkels/Keilwinkels zu erreichen.

12. Elektroantrieb für ein Fahrrad nach einem der Ansprüche 1 bis 11, **dadurch gekennzeichnet, dass** bei Hinterradeinbau mit schräger Pendelachse das Motorgewicht durch ein einstellbares Federelement aufgehoben oder aufgefangen wird.

13. Elektroantrieb für ein Fahrrad nach einem der Ansprüche 1 bis 12, **dadurch gekennzeichnet, dass** ein Elektromagnet vorgesehen ist, mit dem die Schwenkbewegung des Motors aus einer Freilaufposition in eine Arbeitsposition unterstützt und der Anpressdruck des Motors an die Felge erhöht werden kann.

14. Elektroantrieb für ein Fahrrad nach einem der Ansprüche 1 bis 13, **dadurch gekennzeichnet, dass** Anschlussstellen für eine Trinkflaschenhalterung vorgesehen sind, und dass daran ein Akkumulator oder ein Halter eines Akkumulators befestigbar ist.

15. Elektroantrieb für ein Fahrrad nach einem der Ansprüche 2 bis 14, **dadurch gekennzeichnet, dass** einer der beiden Motoren durch Federdruck anstellbar und dauerhaft oder intermittierend als Dynamo betreibbar ist.

## Claims

1. Electric drive for a bicycle with one or two motors and with a friction ring (1) for transmitting the drive power by frictional contact to a wheel, wherein the motor (9, 12) is mounted so as to swing about an axis of swing, and wherein the axis of swing is laterally offset with respect to the motor axis (16), and the axis of swing being parallel, in particular substantially parallel to the motor axis (3, 16), the line connecting the axis of swing (4) and the motor axis (3) forming an angle (a) of less than 45° with the wheel axis (8) in the working position, in order to generate a contact pressure Fₐ of the friction ring against the wheel which is always greater than the transmitted circumferential force Fᵤ, **characterized in that** the motor is of the external rotor motor type, that the friction ring (1) cooperates with a rim (2) of the wheel, that the friction ring is elastic and that an annular groove or recess for receiving the friction ring is provided at or on the rotating cylindrical surface of the external rotor motor (9, 12), wherein when two motors (9, 12) are provided, they are symmetrically arranged and rotate in opposite directions, and that the two motors are fed by two separate motor controllers/governors which receive the same control signal for output regulation.

2. Electric drive for a bicycle according to claim 1, **characterized in that** the two motors (9, 12) can be arranged as a drive unit in front of the fork or in front of the corresponding frame tube.

3. Electric drive for a bicycle according to claim 1 or 2, **characterized in that** a free-idling position is provided and in this free-idling position the greatest possible distance between elastic friction ring (1) and rim (2) is limited by a stop (30, 32, 35).

4. Electric drive for a bicycle according to one of claims 1 to 3, **characterized in that** the rotor comprises a cap (25), and that the cap (25) or the rotor is provided with radial air channels (26) which by centrifugal action generate a cooling air flow through the motor.

5. Electric drive for a bicycle according to one of claims 1 to 4, **characterized in that** the elastic friction ring (1) has a diameter which is smaller than the diameter of a ring carrier (24) on which the elastic friction ring is seated, so that it can be radially pretensioned during installation.

6. Electric drive for a bicycle according to claim 4 or 5, **characterized in that** a screw connection is provided for the cap (25) of the rotor, and **in that** the elastic friction ring (1) can be axially tensioned by means of the cap and the screw connection.

7. Electric drive for a bicycle according to one of the claims 1 to 6, **characterized in that** a flexible fastening system is provided, which allows the subsequent fastening on different types of bicycles, whereby the exact tangential alignment of the motors being adjustable.

8. Electric drive for a bicycle according to one of claims 1 to 7, **characterized in that** a seating for the swing axle (4) can be arranged in the design of the fork or suspension fork or, in the case of rear-wheel drive, in the seat or chain stays and can be adjusted at the factory.

9. Electric drive for a bicycle according to one of claims 1 to 8, **characterised in that** the motor has a motor housing, **in that** the motor housing possesses a stiff, one-sided, asymmetrical motor cradle (7) as an extension arm to accommodate the swing axis (4).

10. Electric drive for a bicycle according to claim 9, **characterized in that** the motor cradle (7) is provided with cooling fins.

11. Electric drive for a bicycle according to one of claims 1 to 10, **characterized in that** the elastic friction ring (1) can roll on the flank of the rim (2) on which it exerts a resulting force (Fᵣₑₛ), which can be resolved into a pressure force (Fₐ) and a circumferential force (Fᵤ), wherein the ratio of circumferential force/contact force corresponds to the tangential value of a wedge angle, wherein the coefficient of friction can be raised by a surface treatment or a surface coating of the rim flank (2) in order to achieve a reduction in the contact pressure and an increase in the tilt/ wedge angle.

12. Electric drive for a bicycle according to one of the requirements 1 to 11, **characterized in that** when mounted on the rear wheel with a diagonal axis of swing, the weight of the motor can be raised or balanced out by an adjustable spring element.

13. Electric drive for a bicycle according to any one of claims 1 to 12, **characterized in that** an electromagnet is provided with which the swinging motion of the motor from the idling position into the working position is supported by an electromagnet with, in particular, the contact pressure of the motor onto the rim being increased.

14. Electric drive for a bicycle according to one of claims 1 to 13, **characterized in that** connection points for a drinking bottle holder are provided, and that the rechargeable battery or holder thereof can be fastened thereto.

15. Electric drive for a bicycle according to one of claims 2 to 14, **characterized in that** one of the two motors can be adjusted by spring tension and works permanently or intermittently as a dynamo.

## Revendications

1. Dispositif d'entraînement électrique pour une bicyclette, comportant un ou deux moteurs et une bague de friction (1) destinée à transmettre la puissance motrice par entraînement par friction à une roue, le moteur (9, 12) étant logé de façon pendulaire autour d'un axe d'oscillation, et l'axe d'oscillation étant décalé latéralement par rapport à l'axe du moteur (16), et l'axe d'oscillation étant parallèle, notamment essentiellement parallèle à l'axe du moteur (3, 16), la ligne joignant l'axe d'oscillation (4) et l'axe du moteur (3) formant en position de travail un angle (a) de moins de 45° avec l'axe de la roue (8), afin de générer une force de pressage Fₐ de la bague de friction sur la roue, ladite force étant toujours supérieure à la force circonférentielle Fᵤ transmise,
**caractérisé en ce que** le moteur est du type moteur à rotor externe, que la bague de friction (1) coopère avec une jante (2) de la roue, que la bague de friction est élastique et qu'au niveau ou sur la surface cylindrique rotative du moteur à rotor externe (9, 12) se trouve une rainure annulaire ou une gorge tournée destinée à recevoir la bague de friction et, quand deux moteurs (9, 12) sont prévus, ces derniers étant disposés symétriquement et tournant en sens opposés, et que les deux moteurs sont alimentés par l'intermédiaire de deux contrôleurs/régulateurs de moteur qui reçoivent le même signal de commande en vue de la régulation de la puissance.

2. Dispositif d'entraînement électrique pour une bicyclette selon la revendication 1, **caractérisé en ce que** les deux moteurs (9, 12) peuvent être disposés comme unité d'entraînement devant la fourche ou devant la base ou le hauban correspondant.

3. Dispositif d'entraînement électrique pour une bicyclette selon la revendication 1 ou 2, **caractérisé en ce qu'**une position de roue libre est prévue et que dans cette position de roue libre, la plus grande distance possible entre la bague de friction élastique (1) et la jante (2) est limitée par une butée (30, 32, 35).

4. Dispositif d'entraînement électrique pour une bicyclette selon l'une des revendications 1 à 3, **caractérisé en ce que** le rotor comporte un couvercle (25) et que le couvercle (25) ou le rotor est muni de canaux d'aération radiaux (26) qui génèrent, par effet centrifuge, un flux d'air de refroidissement traversant le moteur.

5. Dispositif d'entraînement électrique pour une bicyclette selon l'une des revendications 1 à 4, **caractérisé en ce que** la bague de friction élastique (1) a un diamètre qui est inférieur au diamètre d'un porte-bague (24) sur lequel se trouve la bague de friction élastique, de sorte qu'elle peut être précontrainte radialement lors du montage.

6. Dispositif d'entraînement électrique pour une bicyclette selon la revendication 4 ou 5, **caractérisé en ce qu'**un assemblage à vis est prévu pour le couvercle (25) du rotor et que la bague de friction élastique (1) peut être serrée axialement au moyen du couvercle et de l'assemblage à vis.

7. Dispositif d'entraînement électrique pour une bicyclette selon l'une des revendications 1 à 6, **caractérisé en ce qu'**est prévu un système de fixation flexible qui permet le montage ultérieur sur différents types de bicyclette, l'orientation tangentielle exacte des moteurs étant réglable.

8. Dispositif d'entraînement électrique pour une bicyclette selon l'une des revendications 1 à 7, **caractérisé en ce qu'**un support pour l'axe d'oscillation (4) peut être disposé selon la conception de la fourche ou de la fourche suspendue ou, en cas d'entraînement de la roue arrière, dans les haubans ou les bases et peut être ajusté en usine.

9. Dispositif d'entraînement électrique pour une bicyclette selon l'une des revendications 1 à 8, **caractérisé en ce que** le moteur comporte un boîtier de moteur, que le boîtier de moteur possède un porte-moteur (7) rigide asymétrique unilatéralement en tant que bras d'extension destiné à recevoir l'axe d'oscillation (4).

10. Dispositif d'entraînement électrique pour une bicyclette selon la revendication 9, **caractérisé en ce que** le porte-moteur (7) est muni d'ailettes de refroidissement.

11. Dispositif d'entraînement électrique pour une bicyclette selon l'une des revendications 1 à 10, **caractérisé en ce que** la bague de friction élastique (1) peut rouler sur le flanc de la jante (2) et qu'elle exerce une force résultante (F_{rés}) qui peut être décomposée en une force de pressage (Fₐ) et une force circonférentielle (Fᵤ), le rapport force circonférentielle/force de pressage étant égal à la valeur tangentielle d'un angle de cale, un traitement de surface ou un revêtement de surface du flanc de jante (2) permettant de réaliser une augmentation du coefficient de frottement afin d'obtenir une réduction de la force de pressage et une augmentation de l'angle d'attaque/angle de cale.

12. Dispositif d'entraînement électrique pour une bicyclette selon l'une des revendications 1 à 11, **caractérisé en ce qu'**en cas de montage sur la roue arrière avec axe d'oscillation oblique, le poids du moteur est supprimé ou compensé par un élément à ressort réglable.

13. Dispositif d'entraînement électrique pour une bicyclette selon l'une des revendications 1 à 12, **caractérisé en ce qu'**est prévu un électroaimant pouvant assister le mouvement oscillant du moteur d'une position de roue libre à une position de travail et augmenter la force de pressage du moteur contre la jante.

14. Dispositif d'entraînement électrique pour une bicyclette selon l'une des revendications 1 à 13, **caractérisé en ce que** sont prévus des points de raccordement pour porte-bidon et qu'il est possible d'y fixer une batterie ou un support pour batterie.

15. Dispositif d'entraînement électrique pour une bicyclette selon l'une des revendications 2 à 14, **caractérisé en ce qu'**un des deux moteurs est réglable par pression de ressort et peut être utilisé de manière permanente ou intermittente comme dynamo.
